# EUROPÄISCHE PATENTSCHRIFT

(11) **EP 2 011 218 B1**
(45) Veröffentlichungstag und Bekanntmachung des Hinweises auf die Patenterteilung: **21.09.2016**
(21) Anmeldenummer: 07724429.1
(22) Anmeldetag: 20.04.2007
(51) Int. Cl.: H02M 1/00

(54) **HOCHSETZSTELLER-LEISTUNGSFAKTORKORREKTURSCHALTUNG (BOOST-PFC)**
BOOST POWER FACTOR CORRECTION CIRCUIT (BOOST PFC)
CIRCUIT DE CORRECTION DU FACTEUR DE PUISSANCE D'UN HACHEUR ÉLÉVATEUR (BOOST-PFC)

(30) Priorität: 21.04.2006 DE 102006018576
(43) Veröffentlichungstag der Anmeldung: 07.01.2009
(73) Patentinhaber: Tridonic GmbH & Co KG, 6851 Dornbirn (AT)
(72) Erfinder: FINK, Jürgen, A-6971 Hard (AT); MARENT, Günter, A-6780 Bartholomäberg (AT)
(74) Vertreter: Rupp, Christian
(86) Internationale Anmeldenummer: PCT/EP2007/003493
(87) Internationale Veröffentlichungsnummer: WO 2007/121945

(56) Entgegenhaltungen:
- EP-A- 1 603 219
- WO-A-01/82458
- WO-A-03/017453
- US-A- 5 428 286

## Beschreibung

Die vorliegende Erfindung bezieht sich allgemein auf sogenannte Hochsetzsteller-Leistungsfaktor-korrekturschaltüngen (im Englischen "Boost PFC" genannt).

Derartige Schaltungen dienen dazu, eine zugeführte DC- oder AC-Spannung auf ein höheres Niveau umzusetzen (Boost). Gleichzeitig können derartige Schaltungen dazu ausgelegt sein, einen Verbraucher mit einem Leistungsfaktor von nahezu 1 dazustellen (Power Factor Correction, Leistungsfaktorkorrektur).

Derartige Schaltungen finden beispielsweise Anwendung bei Betriebsgeräten für Leuchtmittel, beispielweise bei Elektronischen Vorschaltgeräten (EVGs) für Gasentladungslampen. Wenn die Leuchtmittel hochfrequent betrieben werden sollen, wird die DC-Ausgangsspannung des Boost-PFC (oft auch "Busspannung" genannt), über Wechselrichter in eine hochfrequente AC-Spannung ungesetzt.

Da ein Boost-PFC üblicherweise nicht kurzschlussfest ist, wird der Betrieb einer derartigen Schaltung durch Steuer- und Regelschaltungen gesteuert, denen Parameter aus der Versorgungsspannung, aus der Boost-PFC-Schaltung und/oder aus dem Lastkreis (der die Leuchtmittel enthält) zurückgeführt wird.

Das Zurückführen von diesen Messparametem zu der Steuer- und Regeleinheit führt dazu, dass beim Stand der Technik zahlreiche Pins beispielsweise eines als Steuer- und Regelschaltung verwendeten ASICs belegt werden.

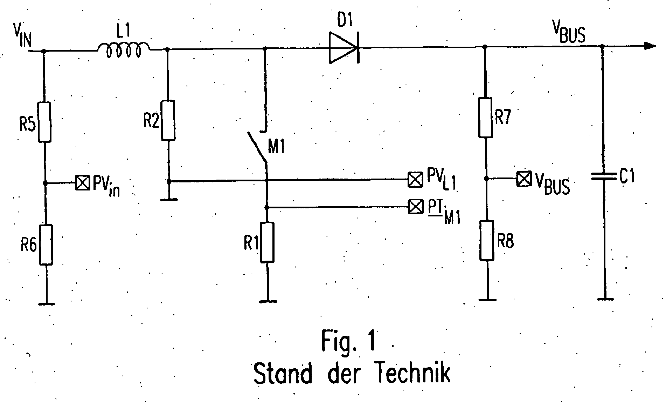

Figur 1 zeigt eine aus dem Stand der Technik bekannte Boost-PFC-Schaltung. Der Schaltung wird eine AC- oder DC-Spannung V_{IN} zugeführt. Eine Ladespule L1 ist mit einer Freilaufdiode D1 in Serie geschaltet. Über einen Schalter M1 kann ein Verbindungspunkt zwischen der Freilaufdiode und der Ladespule L1 selektiv mit Masse verbunden werden. Über die Freilaufdiode D1 kann ein Ladekondensator C1 aufgeladen werden. An der Hochpotentialseite des Ladekondensators C1 stellt sich so mehr bei entsprechender Taktung des Schalters M1 die Ausgangsspannung Vbus ein, die regelmässig über der Amplitude der zugeführten Spannung V1N liegt.

Es ist bekannt, die angelegte Versorgungsspannung Vjn über einen Spannungsteiler R5, R6 beispielsweise an einem Pin PVjn eines ASICs zu erfassen.

Weiterhin ist es bekannt, den Strom durch die Ladespule L1 zu erfassen (Pin PVL1), um somit auf den Nulldurchgang de durch die Ladespule fliessenden Stroms zu schliessen.

Weiterhin kann der in dem geschlossenen Zustand des Schalters M1 durch diesen Schalter M1 fliessende Strom mittels eines Messwiderstands ("Shunt") R1 an einem Pins PIM 1 erfasst werden.

Schliesslich kann auch noch über einen Spannungsteiler R7, R8 die Ausgangsspannung Vbus an einem Pin PVbus erfasst werden.

Die Druckschrift US 5 428 286 zeigt ein Schaltnetzteil. Dort werden zwei Ströme I1 und I2 zu unterschiedlichen Zeitpunkten, bei geöffnetem Schalter und bei geschlossenem Schalter an einem Messpunkt zwischen einer Diode 62 und einem Kondensator 64 bzw. an einem Eingang erfasst. Die dort beschriebene Leistungsfaktorkorrektur (PFC)-Schaltung arbeitet dabei im sogenannten "Continuous Conduction Mode" CCM.

Das Dokument W 01/82458 A1 zeigt einen AC-DC Konverter, welcher eine integrierte Schaltung (IV) zur Steuerung nutzt. An zahlreichen Eingängen der integrierten Schaltung werde verschiedene Parameter des AC-DC Konverters abgegriffen und von der integrierten Schaltung verarbeitet. Unter Anderem wird an einem ersten Eingang über einen Ohmschen Widerstand RZC ein Strom durch eine Ladespule des Konverters erfasst. Nulldurchgänge dieses Stroms werden von der integrierten Schaltung ermittelt. Darüber hinaus wird von einer Schaltung III ein Offset-Signal erzeugt und an einem siebten Anschluss zu einem Signal, welches einem Strom durch einen Schalter Q des Konverters entspricht addiert. Dieses Summensignal wird an dem siebten Anschluss erfasst und ausgewertet.

Die Erfindung setzt nunmehr daran an, die Anzahl der Erfassungspunkte für die Messsignale, beispielsweise die Anzahl der benötigten Pins eines ASICs als Steuer- und Regelschaltung, zu verringern.

Zentraler Lösungsgedanke der Erfindung ist es dabei, die Funktion der Erfassung des durch den Schalter fliessenden Strom zusammen mit einer weiteren Funktion zu kombinieren, um somit einen Pin einsparen zu können.

Beispielsweise ist es möglich die Funktion der Schalterstromerfassung mit der Funktion der Stromnulldurchgangserkennung zu kombinieren, da ein Auslösen dieser Funktionen nur sequentiell und niemals gleichzeitig auftreten kann.

Alternativ kann die Schalterstromerfassung bzw. die Schalterüberstromerkennung auch mit der Funktion der Ausgangsspannung-, der Eingangsspannung, oder der Halbbrückenstrom-erfassung kombiniert werden. In Zeiten, während der PFC-FET eingeschaltet ist, kann über einen Komparator und einen ShuntWiderstand ein Überstrom detektiert werden. Ist der PFC-FET hingegen ausgeschaltet fliesst kein Strom durch den Shunt und die Spannung ist gleich Null. Während dieser Zeit kann nunmehr die zu regelnde Ausgangsspannung, die Eingangsspannung oder der Halbbrückenstrom gemessen werden.

Es wird also vorgeschlagen, für zwei Messsignale nur ein einziger Pin einer ASICSchaltung zu benutzen. Diese kombinierte Erfassung von mehreren Parametern am gleichen Messpunkt, aber zu unterschiedlichen Zeitpunkten wird durch eine Potentialtrennung d.h. unter Verwendung eines Koppelgliedes bzw. Entkopplungselements realisiert.

Die oben angeführt Aufgabe wird erfindungsgemäss durch die Merkmale der unabhängigen Ansprüche gelöst. Die abhängigen Ansprüche bilden den zentralen Gedanken der vorliegenden Erfindung besonders vorteilhafter Weise weiter.

Gemäss einem ersten Aspekt der Erfindung ist ein Verfahren zum Betrieb einer Hochsetzsteller-Leistungsfaktorkorrekturschaltung (Boost-PFC) vorgesehen, wobei mit einem Entladestrom einer mit einer Freilaufdiode in Serie geschalteten Ladespüle der Hochsetzsteller-Leistungsfaktorkorrekturschaltung, durch einen gesteuerten Schalter ein Ladekondensator aufgeladen wird. Der Schalter wird dabei durch eine elektronische Steuer- und/oder Regeleinheit ein- und ausgeschaltet. Durch die elektronische Steuer- und/oder Regeleinheit wird an einem Eingang direkt oder indirekt der Strom durch den Schalter (M1) in Zeitdauern erfasst, in denen der Schalter (M1) geschlossen ist, und ein weiterer Betriebsparameter der Boost-PFC-Schaltung in Zeitdauern erfasst, in denen der Schalter (M1) geöffnet ist. Dabei ist der erfasste weitere Betriebsparameter der Nulldurchgang des durch die Ladespule (L1) fliessenden Stroms. Dabei erfolgt eine Entkopplung der Erfassung des Schalterstroms und der Erfassung des Nulldurchgangs des durch die Ladespule (L1) fliessenden Stroms.

Der Nulldurchgang des durch die Ladespule fliessenden Stroms kann beispielsweise induktiv erfasst werden.

Der Nulldurchgang des durch die Ladespule fliessenden Stroms kann mittels einer mit der Ladespule induktiv gekoppelten Erfassungsspule dadurch ermittelt werden, dass zum Zeitpunkt des Nulldurchgangs die Spannung an der Fassungsspule eine Flanke zeigt. (Ob diese Flanke negativ oder positiv ist, hängt von der Wicklungsrichtung der Erfassungsspule relativ zu der Ladespule ab.)

Dabei erfolgt vorzugsweise eine Entkopplung des Eingangs der Steuer- und/oder Regeleinheit von der induktiven Erfassung beispielsweise mittels einer Diode.

Die Steuer- und Regeleinheit kann zum Zeitpunkt des Nulldurchgangs des Stroms durch die Ladespule den Schalter (M1) wieder einschalten.

Der Strom durch den Schalter bzw. eine dafür repräsentative Grösse kann mit einem Schwellenwert verglichen werden. Der Schalter wird dann wieder ausgeschaltet, sobald dieser Schwellenwert erreicht bzw. überschritten wird.

Ein weiterer Aspekt der Erfindung bezieht sich auf eine Hochsetzsteller-Leistungsfaktorkorrekturschaltung (Boost-PFC). Die Schaltung beinhaltet dabei eine Freilaufdiode (D1), eine mit der Freilaufdiode (D1) in Serie geschaltete Ladespule (L1), einen Schalter (M1), einen Ladekondensator (C1) und eine elektronische Steuer- und/oder Regeleinheit. Der Ladekondensator (C1) wird dabei mit einem durch die Ladespule (L1) erzeugten Entladestrom durch den gesteuerten Schalter (M1) aufgeladen. Der Schalter (M1) ist dabei durch die elektronische Steuer- und/oder Regeleinheit ein- und ausschaltbar. Die elektronische Steuer- und/oder Regeleinheit erfasst dabei an einem Eingang direkt oder indirekt den Strom durch den Schalter (M1) in Zeitdauern erfasst, in denen der Schalter (M1) geschlossen ist. Die elektronische Steuer- und/oder Regeleinheit erfasst dabei einen weiteren Betriebsparameter der Boost-PFC-Schaltung in Zeitdauern, in denen der Schalter (M1) geöffnet ist. Der erfasste weitere Betriebsparameter ist der Nulldurchgang des durch die Ladespule (L1) fließenden Stroms. Die Schaltung weist weiter ein Entkoppelelement zur Entkopplung der Erfassung des Schalterstroms und der Erfassung des Nulldurchgangs des durch die Ladespule (L1) fliessenden Stroms auf.

Schliesslich bezieht sich die Erfindung auch auf ein elektronisches Vorschaltgerät für Gasentladungslampen, das eine derartige Boost-PFC-Schaltung aufweist.

Weitere Merkmale, Vorteile und Eigenschaften der vorliegenden Erfindung sollen nunmehr bezugnehmend auf die Figuren der begleitenden Zeichnungen näher erläutert werden.
Figur 1 zeigt eine aus dem Stand der Technik bekannte Boost-PFC-Schaltung.
Figur 2 zeigt eine exemplarische Schaltung, die zu illustrativen Zwecken im Zusammenhang mit einem Betriebsgerät für Leuchtmittel, wie beispielsweise einem elektronischen Vorschaltgerät für Gasentladungslampen dargestellt ist,
Figur 3 zeigt eine erfindungsgemässe Schaltung, bei der an dem gleichen Punkt in der Schaltung (PVL11 PMI) der Nulldurchgang des Ladespulenstroms wie auch der Schalterstrom abgegriffen werden können,
Figur 4 zeigt Signalverläufe, wie sie an definierten Punkten der Schaltung gemäss Figur 3 auftreten,
Figur 5 und Figur 6 zeigen beispielsweise Abwandlungen der erfindungsgemässen Schaltung von Figur 3,
Figur 7 zeigt eine exemplarische Schaltung, bei der an dem gleichen Punkt in der Schaltung (PVt,us> PIM I) der Schalterstrom und die Ausgangsspannung abgegriffen werden können,
Figur 8 zeigt ein weiteres Ausführungsbeispiel einer exemplarischen Schaltung, bei der an dem gleichen Punkt in der Schaltung (PV jn> PIM 1) der Schalterstrom und die Eingangsspannung abgegriffen werden können, und
Figur 9 zeigt eine exemplarische Schaltung, bei der an dem gleichen Punkt in der Schaltung (PIht>, PIMO der Schalterstrom und der

Halbbrückenstrom abgegriffen werden können.

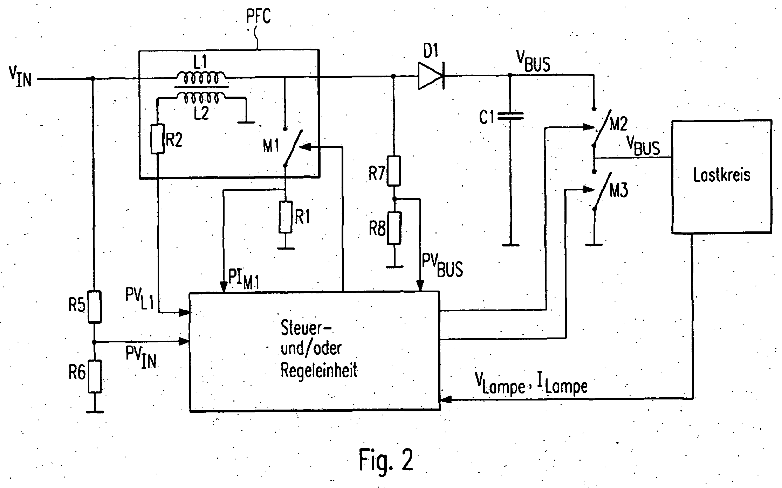

Figur 2 zeigt, wie eine PFC-Boost-Schaltung zusammen mit einer entsprechenden Steuer- und/oder Regeleinheit für den Betrieb von Leuchtmitteln verwendet werden kann.

Wie dargestellt werden der Steuer- und/oder Regeleinheit Messgrössen aus verschiedenen Bereichen der Schaltung zugeführt, darunter unter anderem aus dem Bereich der Versorgungsspannung, der PFC-Boost-Schaltung, sowie aus dem Lastkreis, wobei die Leuchtmittel Teil des Lastkreises sind.

Die Ausgangsspannung Vbus der PFC-Boost-Schaltung kann beispielsweise über einen Wechselrichter mit zwei Schaltern M2, M3, die jeweils von der Steuer- und/oder Regeleinheit angesteuert werden, in eine hochfrequente Betriebsspannung VAC für den Lastkreis umgesetzt werden. Die Steuer- und/oder Regeleinheit kann somit steuernd in den Lastkreis (Schalter M2, M3) sowie in die PFC-Boost-Schaltung (Schalter M1) einwirken.

In dem in Figur 2 dargestellten Beispiel wird der Strom durch die Ladespule L1 der PFC-Boost-Schaltung über eine Erfassungsspule L2 und einen
Widerstand R2 induktiv abgegriffen. Diese induktive Erfassung des Stroms durch die Ladespule L1 mittels der Erfassungsspule L2 stellt einen Aspekt dar, der im Übrigen unabhängig von der Erfassung des Ladespulenstroms und des Schalterstroms angewendet werden kann und bereits für sich selbst genommen Vorteile bringt.

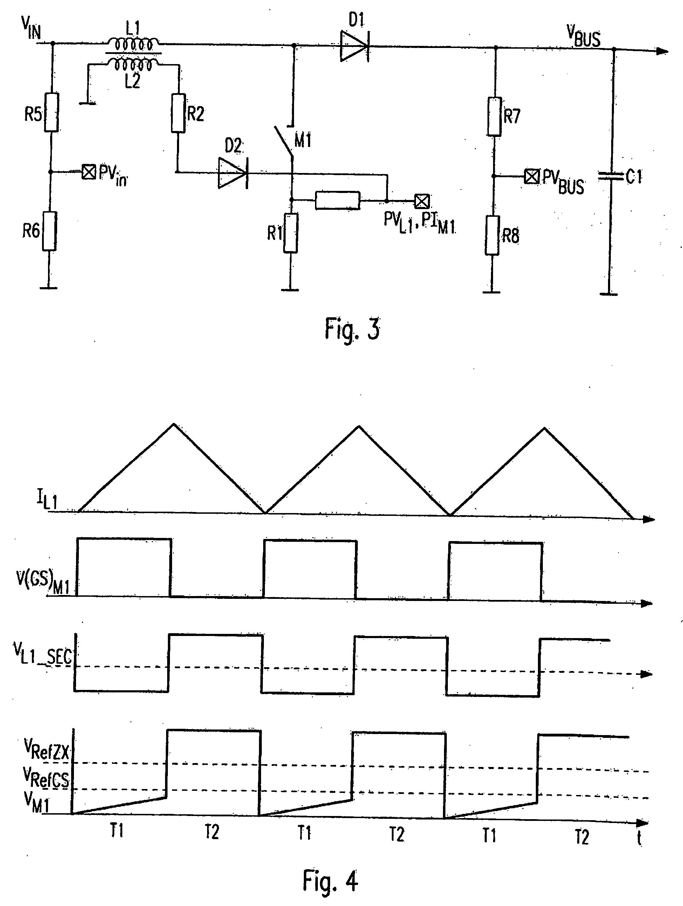

Diese induktive Erfassung des Stroms durch die Ladespule L2 kann Vorteilhafterweise, muss aber nicht, mit einer Schaltung wie in Figur 3 gezeigt kombiniert werden. An einem einzigen Punkt der Schaltung PVLI, PIMI wird dabei sowohl der Strom IM I durch den geschlossenen Schalter M1 wie auch der Nulldurchgang des Stroms durch die Ladespule L1 erfasst. Dieser Punkt PVn, PIMI in Figur 3 kann beispielsweise einen Pin einer ASIC-Schaltung darstellen, bzw. mit einem derartigen Pin verbunden werden.

Die induktive Erfassung L2 des Spulenstroms L1 ist durch ein Entkopplungselement, wie beispielsweise die gezeigte Diode D2 von dem Erfässungs-Pin PVL1, PIMI getrennt.

Zu Zeiten, zu denen der Schalter M1 geöffnet wird, kann also an diesem Punkt PVLI, PIMI der Nulldurchgang des Spulenstroms IMI gemessen werden. Zu Zeitdauern, in denen der Schalter M1 wie durch die Steuer- und/oder Regeleinheit angesteuert geschlossen ist, kann an diesen Punkt über den Messwiderstand R1 der Strom IMI durch den Schalter M1 gemessen werden, insbesondere, um einen allzu hohen Strom (d. h. einen Strom IMI über einen definierten Schwellenwert) zu vermeiden.

Das Entkoppelelement wie beispielsweise die dargestellte Diode D2 dient also zur Entkopplung der beiden Funktionen (Messung des Schalterstroms/Messung des Nulldurchgangs des Spulenstroms).

In Figur 4 sind Verläufe der verschiedenen in der Schalung von Figur 3 auftretenden Spannungen und Ströme dargestellt.

IL 1 zeigt dabei den Strom durch die Ladespule L1.

V(GS)MI zeigt die Ansteuerspannung, die von der Steuer-Regeleinheit zur Ansteuerung des Schalters M1 ausgegeben wird.

VLI SEC zeigt den Verlauf der Spannung an der Erfassungsspule L2. VRe[kappa]x zeigt einen ersten Schwellenwert.

VRefcs zeigt einen zweiten Schwellenwert. VM i zeigt einen für den Schalterstrom repräsentierten Wert, der mit den Schwellenwerten VRefzx und VRefcs verglichen werden kann.

Die Zeitdauer T1 ist die Zeitdauer, in der der Schalter M1 durchgeschaltet ist und somit der Spulenstrom Iu ansteigt.

Die Zeitdauer T2 zeigt einen Zeitabschnitt, in dem der Schalter geöffnet ist und sich somit die Energie des in der Spule L1 gespeicherten Magnetfelds über die Diode D1 zum Ladekondensator C 1 hinentlädt.

Wenn der Strom Iu durch die Drossel L1 ansteigt, steigt gleichzeitig auch der Strom IMI durch bzw. die dafür repräsentative Grösse VM i-

Als eine Schutzfunktion wird dieser Schalterstrom VMI mit einem Schwellenwert VRefcS verglichen. Sollte dieser Referenzwert VRefcs überschritten werden, wird der Schalter M1 (vorzeitig) ausgeschaltet. Ein derartiger Fall tritt in dem Szenario gemäss Figur 4 nicht auf. Vielmehr ist dort vorgesehen, dass der Schalter M1 in regelmässigen Abständen ausgeschaltet wird.

Während dieser Zeitdauer T1, in der also der Schalter geschlossen ist, sperrt die Diode D1, da die Spannung VLI_SEC der Erfassungsspule L2 negativ ist.

Wird nunmehr der Schalter M2 durch die Steuer- und Regeleinheit geöffnet (Zeitdauer T2) fällt der Strom Iu durch die Drossel L1 ab. Die Spannung VUJSEC an der Erfassungsspule L2 wird positiv und verbleibt auf einen positiven Wert bis zum Nulldurchgang des Ladespulenstroms I LIZum Zeitpunkt des Nulldurchgangs des Stroms I LI durch Ladespule L1 zeigt die Spannung VLI SEC durch Erfassungsspule L2 eine (im Beispiel negative) Flanke.

Dies kann beispielsweise dadurch erfasst werden, dass ermittelt wird, dass zu diesen Zeitpunkt die Spannung VLI_SEC durch die Erfassungsspule L2 einen definierten Referenzwert VRe{Z[chi] unterschreitet. Zu diesem Zeitpunkt des Nulldurchgangs des Spulenstroms In schaltet die Steuer- und Regeleinheit dann wieder den Schalter ein und es folgt die Zeitdauer T1 mit eingeschaltetem Schalter M1, zu der der Spulenstrom wieder kontinuierlich ansteigt.

Das Entkopplungselement beispielsweise in Form der Diode D2 sorgt also dafür, dass beispielsweise durch ein Sperren der Diode D2 die Spulenstromerfassung von dem Schalter M2 entkoppelt ist, so dass isoliert der Strom durch den Schalter gemessen werden kann. Vergleichbar zu der Diode D2 kann auch ein Transistor oder eine kapazitive Entkopplung vorgesehen sein, die also im eingeschalteten Zustand des Schalters M1 diesen von dem Potenzial der Erfassungsspule L2 trennen.

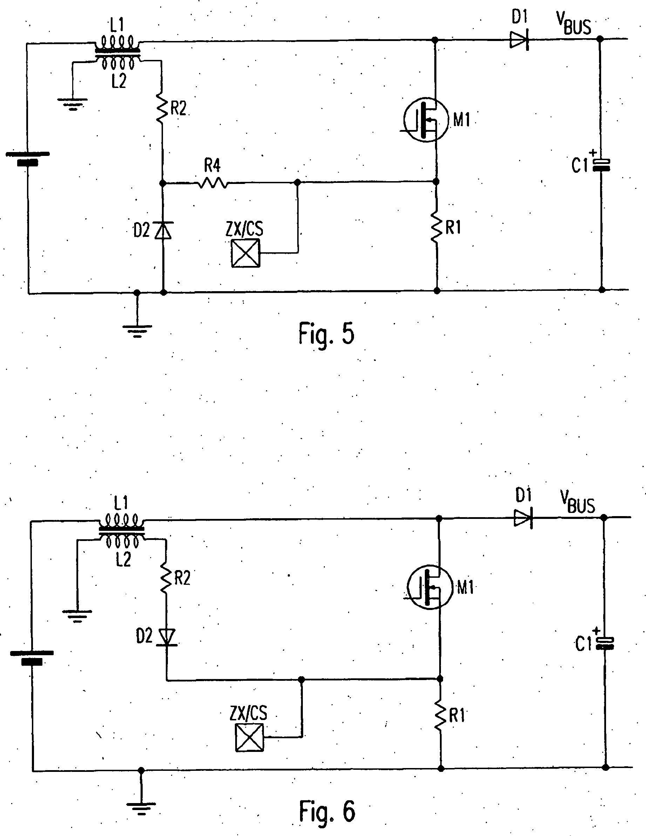

Figuren 5 und 6 zeigen Abwandlungen der Schaltung von Figur 3, wobei die Abwandlungen in der schalungstechnischen Anordnung des Entköpplungselements D2 sowie der Widerstände R1, R3 bzw. R4 liegen.

Unabhängig davon können auch bei den Schaltungen gemäss Figur 5 und 6 die erfindungsgemässen Aspekte der induktiven Spulenstromerfassung und/oder die Erfassung des Spulenstroms und des Schalterstroms M1 an einem Pin ZX/ZS verwertet werden.

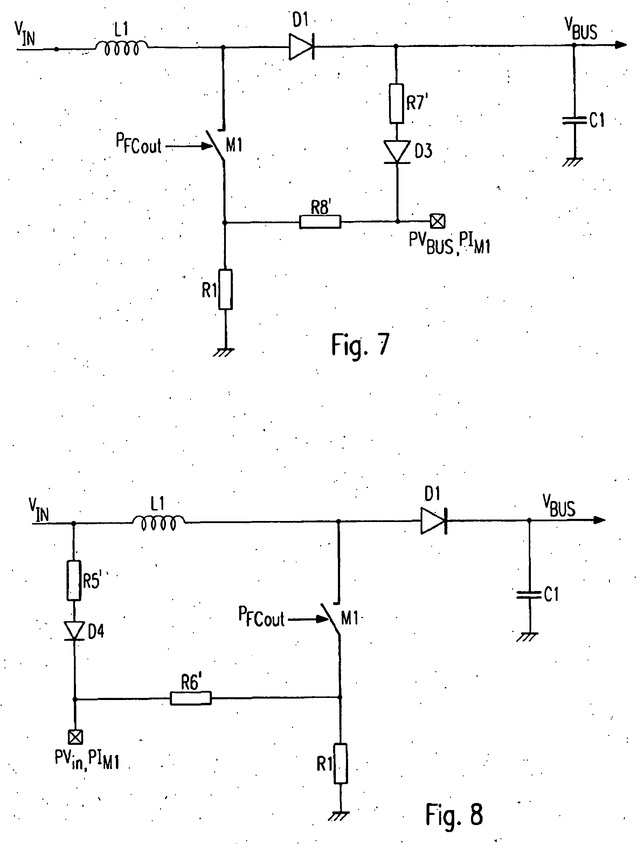

In Figur 7 ist ein weiteres Ausführungsbeispiel einer PFC-Boost-Schaltung gezeigt.

Die diesem Ausführungsbeispiel zugrundeliegende Schaltung enthält eine Ladespule L1, der eine Eingangswechselspannung Vjn zugeführt wird. Die Ladespule L1 ist vor einer Freilaufdiode D1 in Serie geschaltet, wobei an der Verbindung zwischen der Ladespule L1 und der Freilaufdiode D1 ein steuerbarer Schalter M1 angeschlossen ist.

Ist der Schalter M1 eingeschaltet, so ist die Ladespule L1 gegen Masse kurzgeschlossen und die Freilaufdiode D1 gesperrt. Die Ladespule L1 lädt sich dann auf und Energie wird dadurch in der Ladespule L1 gespeichert.

Wenn der Schalter M1 hingegen ausgeschaltet ist, ist die Freilaufdiode D1 leitend. Die Ladespule entlädt sich dann über die Freilaufdiode D1 in einen Ladekondensator C1, der die Freilaufdiode D1 mit Masse verbindet und einer Ausgangsspannung Vbus ausgesetzt ist. Ein Strommesswiderstand (Shunt) R1 in der Source-Leitung des Schalters M1 ermöglicht im geschlossenen Zustand des Schalters M1 die Erfassung des durch diesen Schalter M1 fliessenden Stroms, um beispielsweise einen eventuellen Überstromzustand feststellen zu können.

Parallel zu dem Ladekondensator C1 ist ein Spannungsteiler R7', R8' angeordnet, um die Ausgangsgleichspannung Vbus an einem Pin PVbUS, PIMI ZU messen und dementsprechend einen Überspannungszustand beispielsweise aufgrund von Lastsprüngen feststellen zu können. Der Spannungsteiler R7', R8 ist zwischen der Source-Leitung des Schalters M1 und einem die Ausgangsspannung VbUS bereitstellenden Ausgangspunkt angeordnet.

Wenn der Schalter M1 offen ist, kann die Ausgangsspannung Vbus über einen erweiterten Spannungsteiler R7', R8' und R1 über den Pin P Vbus, PIMI gemessen werden. Dieser Messwert wird der Steuer- und/oder Regeleinheit zugeführt, welche dann über das Einund Ausschalten des Schalters M1 die Busspannung entsprechend regeln kann.

An einem einzigen Punkt PVbus, PIMI der PFCBoost-Schaltung wird also sowohl der Strom IMI durch den geschlossenen Schalter M1 wie auch die Ausgangsspannung Vbus der PFCBoost-Schaltung erfasst.. Dieser Punkt PVbus, PIMI in Figur 7 kann beispielsweise einen Pin einer ASIC-Schaltung darstellen, bzw. mit einem derartigen Pin verbunden werden.

Die Erfassung der Ausgangsspannung Vbus ist vorzugsweise durch ein

Entkopplungselement, wie beispielsweise die gezeigte Diode D3 von dem ErfassungsPin PVbus, PIMI getrennt. Die Diode D3 ist zwischen dem Widerstand R7' und dem Pin PVbus, PIMI angeordnet.

Zu Zeiten, zu denen der Schalter M1 geöffnet wird, kann also an diesem Punkt PVn, PIM I die Ausgangsspannung Vbus gemessen werden.

Zu Zeitdauern, in denen der Schalter M1 wie durch die Steuer- und/oder Regeleinheit angesteuert geschlossen ist, kann an diesen Punkt der Strom IMI durch den Schalter M1 gemessen werden, insbesondere, um einen allzu hohen Strom (d. h. einen Strom IM1 über einen definierten Schwellenwert) zu vermeiden. Das Entkoppelelement wie beispielsweise die dargestellte Diode D3 dient somit zur Entkopplung der beiden Funktionen Messung des Schalterstroms und Messung der Ausgangsspannung.

Die Fig. 8 zeigt ein weiteres Ausfuhrungsbeispiel einer PFC-Boost-Schaltung.

Diese Schaltung ändert sich dahingehend von der in Fig. 7 gezeigten Schaltung, dass diesmal an einem einzigen Pin oder Punkt PVjn, PIMI bei geöffnetem bzw. geschlossenem Schalter M13 alternativ die Eingangsspannung Vin der PFC-BoostSchaltung oder der Schalterstrom ImI gemessen werden kann.

Die Erfassung dieser zwei Parameter wird mit Potentialtrennung durchgeführt, in dem ein Entkopplungselement, beispielsweise eine Diode D4, zwischen dem Erfassungspin P Vjn, PIM I und dem Widerstand R5' angeordnet ist.

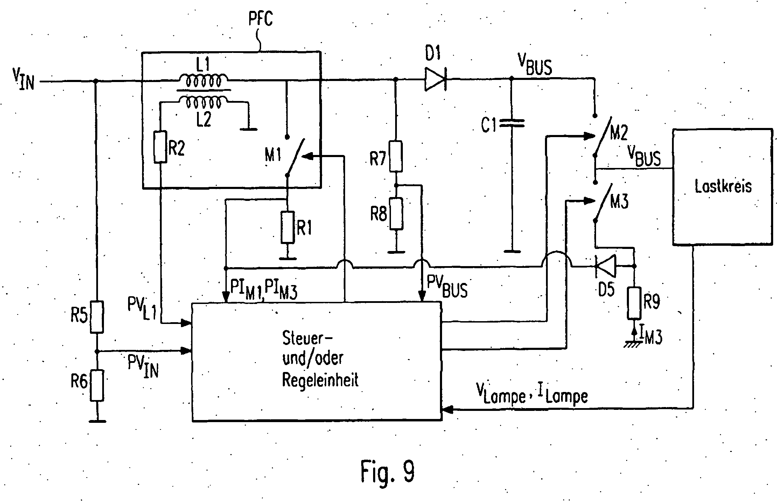

Die Fig. 9 zeigt ein weiteres Ausfuhrungsbeispiel einer PFC-Boost-Schaltung, wobei die Ausgangsspannung Vbus der PFC-BoostSchaltung beispielsweise über einen Wechselrichter mit zwei Schaltern M2, M3, die jeweils von der Steuer- und/oder Regeleinheit angesteuert werden, in eine hochfrequente Betriebsspannung VAC für den Lastkreis umgesetzt werden.

Der Halbbrückenstrom Im3 wird mittels einem in Serie mit dem Schalter M3 angeordneten Widerstand R9 vom Pin PIM3, PIMI erfasst.

Diese Erfassung der Stroms Im3 ist durch ein Entkopplungselement, vorzugsweise durch eine Diode D5, vom Erfassungspunkt PIM3, PIMI getrennt.

## Patentansprüche

1. Verfahren zum Betrieb einer Hochsetzsteller-Leistungsfaktorkorrekturschaltung (Boost-PFC),
wobei mit einem Entladestrom einer mit einer Freilaufdiode (D1) in Serie geschalteten Ladespule (L1) der Hochsetzsteller-Leistungsfaktorkorrekturschaltung, durch einen gesteuerten Schalter (M1) ein Ladekondensator (C1) aufgeladen wird,
wobei der Schalter (M1) durch eine elektronische Steuer- und oder Regeleinheit ein- und ausgeschaltet wird,
**dadurch gekennzeichnet,**
**dass** durch die elektronische Steuer- und oder Regeleinheit an einem Eingang
- direkt oder indirekt der Strom durch den Schalter (M1) in Zeitdauern erfasst wird, in denen der Schalter (M1) geschlossen ist, und
- ein weiterer Betriebsparameter der Boost-PFC-Schaltung in Zeitdauern erfasst wird, in denen der Schalter (M1) geöffnet ist, wobei der erfasste weitere Betriebsparameter der Nulldurchgang des durch die Ladespule (L1) fließenden Stroms ist,
wobei eine Entkopplung der Erfassung des Schalterstroms und der Erfassung des Nulldurchgangs des durch die Ladespule (L1) fliessenden Stroms erfolgt.

2. Verfahren nach Anspruch 1,
wobei der Nulldurchgang des durch die Ladespule (L1) fliessenden Stroms potentialgetrennt, insbesondere induktiv erfasst wird.

3. Verfahren nach einem der vorigen Ansprüche,
wobei der Nulldurchgang des durch die Ladespule (L1) fliessenden Stroms mittels einer mit der Ladespule (L1) induktiv gekoppelten Erfassungsspule (L2) dadurch ermittelt wird, dass zum Zeitpunkt des Nulldurchgangs die Spannung an der Erfassungsspule (L2) eine Flanke zeigt.

4. Verfahren nach einem der Ansprüche 1-3,
wobei eine Entkopplung des Eingangs der Steuer- und/oder Regeleinheit von der induktiven Erfassung erfolgt.

5. Verfahren nach einem der vorhergehenden Ansprüche,
wobei der Schalter (M1) von der Steuer- und Regeleinheit zum Zeitpunkt des Nulldurchgangs des Stroms durch die Ladespule (L1) wieder eingeschaltet wird.

6. Verfahren nach einem der vorhergehenden Ansprüche,
wobei der Strom durch den Schalter (M1) bzw. eine dafür repräsentative Grösse mit einem Schwellenwert verglichen wird und der Schalter (M1) wieder ausgeschaltet wird, sobald der Schwellenwert erreicht oder überschritten wird.

7. Hochsetzsteller-Leistungsfaktorkorrekturschaltung (Boost-PFC),
wobei die Schaltung eine Freilaufdiode (D1), eine mit der Freilaufdiode (D1) in Serie geschaltete Ladespule (L1), einen Schalter (M1), einen Ladekondensator (C1) und eine elektronische Steuer- und/oder Regeleinheit aufweist, wobei mit einem durch die Ladespule (L1) erzeugten Entladestrom durch den gesteuerten Schalter (M1) der Ladekondensator (C1) aufgeladen wird,
wobei der Schalter (M1) durch die elektronische Steuer- und/oder Regeleinheit ein- und ausschaltbar ist,
**dadurch gekennzeichnet,**
**dass** die elektronische Steuer- und/oder Regeleinheit an einem Eingang
- direkt oder indirekt den Strom durch den Schalter (M1) in Zeitdauern erfasst, in denen der Schalter (M1) geschlossen ist, und
- einen weiteren Betriebsparameter der Boost-PFC-Schaltung in Zeitdauern erfasst, in denen der Schalter (M1) geöffnet ist, wobei der erfasste weitere Betriebsparameter der Nulldurchgang des durch die Ladespule (L1) fließenden Stroms ist, und
**dass** die Schaltung weiter ein Entkoppelelement zur Entkopplung der Erfassung des Schalterstroms und der Erfassung des Nulldurchgangs des durch die Ladespule (L1) fliessenden Stroms aufweist.

8. Schaltung nach Anspruch 7,
wobei der Nulldurchgang des durch die Ladespule (L1) fliessenden Stroms potentialgetrennt, insbesondere induktiv erfasst wird.

9. Schaltung nach Anspruch 7 oder 8,
wobei die Steuer- und Regeleinheit zum Zeitpunkt des Nulldurchgangs des Stroms durch die Ladespule (L1) den Schalter (M1) wieder einschaltet.

10. Schaltung nach einem der Ansprüche 7-9,
wobei der Strom durch den Schalter (M1) bzw. eine dafür repräsentative Grösse mit einem Schwellenwert verglichen wird und der Schalter (M1) wieder ausgeschaltet wird, sobald der Schwellenwert erreicht oder überschritten wird.

11. Elektronisches Vorschaltgerät für Gasentladunglampen,
aufweisend eine Schaltung nach einem der Ansprüche 7 bis 10.

## Claims

1. Method for operating a step-up converter power factor correction circuit (PFC boost converter),
wherein a charging capacitor (C1) is charged through a controlled switch (M1) with a discharge current of a free-wheel diode (D1) connected in series with the charging coil (L1) of the step-up converter power factor correction circuit,
wherein the switch (M1) is switched on and off through an electronic control and/or regulation unit,
**characterized in that**,
the current through the switch (M1) is detected directly or indirectly at an input of the electronic control and/or regulation unit in periods during which the switch (M1) is closed, and
- a further operating parameter of the PFC boost circuit is detected in periods during which the switch (M1) is opened, wherein the detected further operating parameter is the zero crossing of the current flowing through the charging coil (L1).
wherein decoupling of the detection of the switch current and the detection of the zero crossing of the current flowing through the charge coil (L1) is carried out.

2. Method according to claim 1,
wherein the zero crossing of the current flowing through the charging coil (L1) is detected electrically isolated, in particular inductively.

3. Method according to any one of the preceding claims,
wherein the zero crossing of the current flowing through the charging coil (L1) is so detected by means of a detection coil (L2) inductively coupled with the charging coil (L1) that at the point in time of the zero crossing, the voltage shows a flank at the detection coil (L2).

4. Method according to any one of the claims 1-3,
wherein decoupling of the input of the control and/or regulation unit follows the inductive detection.

5. Method according to any one of the preceding claims,
wherein the switch (M1) of the control and regulation unit is switched on again at the point in time of the zero crossing of the current through the charge coil (L1).

6. Method according to one of the preceding claims,
wherein the current or a representative magnitude is compared by the switch (M1) with a threshold value, and the switch (M1) is switched off again as soon as the threshold value is reached or exceeded.

7. Step-up converter power factor correction circuit (PFC boost converter)
wherein the circuit comprises a free-wheel diode (D1), a charging coil (L1) connected in series with the free-wheel diode (D1), a switch (M1), a charging capacitor (C1) and an electronic control and/or regulation unit, wherein the controlled switch (M1) of the charging capacitor (C1) is charged with a discharge current generated through the charging coil (L1),
wherein the switch (M1) is switched on and off by the electronic control and/or regulation unit,
**characterized in that**,
at an input of the electronic control and/or regulation unit:
- the current through the switch (M1) is detected directly or indirectly at an input of the electronic control and/or regulation unit in periods during which the switch (M1) is closed, and
- a further operating parameter of the PFC boost circuit is detected in periods during which the switch (M1) is opened, wherein the detected further operating parameter is the zero crossing of the current flowing through the charging coil (L1), and
- the circuit further comprises a decoupling element for the decoupling of the detection of the zero crossing of the current flowing through the charge coil (L1).

8. Circuit according to claim 7,
wherein the zero crossing of the current flowing through the charging coil (L1) is detected electrically isolated, in particular inductively.

9. Circuit according to claim 7 or 8,
wherein the control unit at the time of the zero crossing of the current flowing through the charging coil (L1) switches on the switch (M1) again.

10. Circuit according to any one of the claims 7 to 9,
wherein the current or a representative magnitude is compared by the switch (M1) with a threshold value, and the switch (M1) is switched off again as soon as the threshold value is reached or exceeded.

11. Electronic ballast for gas discharge lamps, comprising a circuit according to one of the claims 7 to 10.

## Revendications

1. Procédé pour le fonctionnement d'un circuit de correction de facteur de puissance de convertisseur élévateur (Boost-PFC),
un condensateur de charge (C1) est chargé avec un courant de décharge d'une bobine de charge (L1) branchée en série avec une diode de roue libre (D1) du circuit de correction de facteur de puissance de convertisseur élévateur, par un interrupteur (M1) contrôlé,
l'interrupteur (M1) étant activé et désactivé par une unité de commande ou de régulation électronique,
**caractérisé en ce que**
l'unité de commande ou de régulation électronique permet, au niveau d'une entrée :
- de déterminer directement ou indirectement le courant à travers l'interrupteur (M1) pendant les périodes où l'interrupteur (M1) est fermé et
- de déterminer un paramètre de fonctionnement supplémentaire du circuit Boost-PFC pendant les périodes où l'interrupteur (M1) est ouvert, le paramètre de fonctionnement supplémentaire déterminé étant le passage à zéro du courant traversant la bobine de charge (L1),
un découplage ayant lieu entre la détermination du courant de l'interrupteur et la détermination du passage à zéro du courant traversant la bobine de charge (L1).

2. Procédé selon la revendication 1,
le passage à zéro du courant traversant la bobine de charge (L1) étant déterminé avec une séparation de potentiel, plus particulièrement de manière inductive.

3. Procédé selon l'une des revendications précédentes,
le passage à zéro du courant traversant la bobine de charge (L1) étant déterminé à l'aide d'une bobine de mesure (L2) couplée de manière inductive avec la bobine de charge (L1), du fait que, au moment du passage à zéro, la tension présente un flanc au niveau de la bobine de mesure (L2).

4. Procédé selon l'une des revendications 1 à 3,
un découplage ayant lieu entre l'entrée de l'unité de commande et/ou de régulation et la détermination inductive.

5. Procédé selon l'une des revendications précédentes,
l'interrupteur (M1) étant à nouveau activé par l'unité de commande et de régulation au moment du passage à zéro du courant traversant la bobine de charge (L1).

6. Procédé selon l'une des revendications précédentes,
le courant traversant l'interrupteur (M1) ou une grandeur représentative de celui-ci est comparé avec une valeur seuil et l'interrupteur (M1) est à nouveau désactivé dès que la valeur seuil est atteinte ou dépassée.

7. Circuit de correction de facteur de puissance de convertisseur élévateur (Boost-PFC), le circuit comprenant une diode de roue libre (D1), une bobine de charge (L1) branchée en série avec la diode de roue libre (D1), un interrupteur (M1), un condensateur de charge (C1) et une unité de commande et/ou de régulation électronique, le condensateur de charge (C1) étant chargé avec un courant de décharge généré par la bobine de charge (L1), par l'intermédiaire de l'interrupteur (M1) contrôlé,
l'interrupteur (M1) pouvant être activé et désactivé par l'unité de commande et/ou de régulation électronique,
**caractérisé en ce que**
l'unité de commande et/ou de régulation électronique permet, au niveau d'une entrée :
- de déterminer directement ou indirectement le courant à travers l'interrupteur (M1) pendant les périodes où l'interrupteur (M1) est fermé et
- de déterminer un paramètre de fonctionnement supplémentaire du circuit Boost-PFC pendant les périodes où l'interrupteur (M1) est ouvert, le paramètre de fonctionnement supplémentaire déterminé étant le passage à zéro du courant traversant la bobine de charge (L1), et
**en ce que** le circuit comprend en outre un élément de découplage pour le découplage entre la détermination du courant de l'interrupteur et la détermination du passage à zéro du courant traversant la bobine de charge (L1).

8. Circuit selon la revendication 7,
le passage à zéro du courant traversant la bobine de charge (L1) étant déterminé avec une séparation du potentiel, plus particulièrement de manière inductive.

9. Circuit selon la revendication 7 ou 8,
l'unité de commande et/ou de régulation électronique activant à nouveau l'interrupteur (M1) au moment du passage à zéro du courant traversant la bobine de charge (L1).

10. Circuit selon l'une des revendications 7 à 9,
le courant traversant l'interrupteur (M1) ou une grandeur représentative de celui-ci étant comparé avec une valeur seuil et l'interrupteur (M1) étant à nouveau désactivé dès que la valeur seuil est atteinte ou dépassée.

11. Ballast électronique pour lampes à décharge de gaz, comprenant un circuit selon l'une des revendications 7 à 10.
